Europäisches Patentamt

European Patent Office

Office européen des brevets

(11) Veröffentlichungsnummer: **0 084 098**
**B1**

(12) # EUROPÄISCHE PATENTSCHRIFT

(45) Veröffentlichungstag der Patentschrift:
20.03.85

(51) Int. Cl.⁴: **H 04 B 3/56, H 02 J 13/00**

(21) Anmeldenummer: **82110999.8**

(22) Anmeldetag: **27.11.82**

(54) **Empfänger für Tonfrequenz-Signale.**

(30) Priorität: **18.01.82 CH 262/82**

(43) Veröffentlichungstag der Anmeldung:
**27.07.83 Patentblatt 83/30**

(45) Bekanntmachung des Hinweises auf die Patenterteilung:
**20.03.85 Patentblatt 85/12**

(84) Benannte Vertragsstaaten:
**AT BE DE NL SE**

(56) Entgegenhaltungen:
**EP - A - 0 056 455**
**CH - A - 504 139**
**CH - A - 604 409**
**DE - C - 468 884**
**US - A - 1 672 940**
**US - A - 1 724 112**

(73) Patentinhaber: **LGZ LANDIS & GYR ZUG AG,
CH-6301 Zug (CH)**

(72) Erfinder: **Pilloud, Bernard, Albisstrasse 44,
CH-6312 Steinhausen (CH)**

(74) Vertreter: **Müller, Hans-Jürgen, Dipl.-Ing. et al, Müller,
Schupfner & Gauger
Lucile-Grahn-Strasse 38 Postfach 80 13 69,
D-8000 München 80 (DE)**

ACTORUM AG

## Beschreibung

Die Erfindung bezieht sich auf einen Empfänger für Tonfrequenzsignale nach dem Oberbegriff des Anspruchs 1.

Solche Empfänger finden vorzugsweise in Anlagen zur automatischen Übertragung von Informationen zu einer Abfragezentrale Verwendung, die von in der Niederspannungsebene angeordneten Zählerstandsermittlungsgeräten gesammelt werden. Eine solche Abfragezentrale kann im Prinzip in der gleichen Netzebene wie die Sender in den Ermittlungsgeräten gelegen sein. Da zumindest bei grösseren Netzen die Abfragezentralen in einer höheren Netzebene, insbesondere in der Mittelspannungsebene, vorhanden sind, um möglichst viele Zählerstände zu erfassen, müssen die Signale die Information über die Verteilertransformatoren zwischen den beiden Spannungsebenen übertragen und von der höheren Netzebene ausgekoppelt werden.

In der CH-PS Nr. 604409 ist ein Empfänger gemäss dem Oberbegriff des Anspruchs 1 beschrieben, bei welchem ein breitbandiges Tonfrequenzsignal durch eine Ankopplung an das Wechselstromverteilungsnetz empfangen, durch ein Rauschfilter von Rauschanteilen befreit und Auswerteketten zugeführt wird. Diese Empfänger sind für ein System bestimmt, bei welchem sich die Signalfrequenz innerhalb eines Impulses in vorbestimmter Weise ändert.

In der US-PS Nr. 1724112 ist ferner ein System zur Übertragung von Informationen mittels Tonfrequenzsignalen über ein Mehrphasennetz beschrieben, bei welchem gemäss der dortigen Fig. 7 die Auskopplung von Signalen aus zwei Phasen der Niederspannungsebene erfolgt, wobei die erfassten Ströme in umgekehrter Richtung laufen.

Schliesslich ist durch die CH-PS Nr. 504139 ein Rundsteuerverfahren mit breitbandiger Signalübertragung (Signalspektrum bis mehrere hundert Hertz) über Leitungen eines Wechselstromverteilungsnetzes durch impulsförmige Überlagerung von tonfrequenten Schwingungen offenbart. Die Länge der überlagerten Impulse liegt innerhalb des durch eine Achtelperiode und eine ganze Periode der Netzwechselspannung begrenzten Bereiches. Im zugehörigen Empfänger wird ein Hochpass mit nachgeschaltetem Kammfilter zur Herausfilterung der Oberwellen der Netzspannung verwendet.

Bei der bisher bekannten Auskopplung von auszuwertenden Tonfrequenzsignalen aus beliebigen Netzspannungsebenen wurde ein Wandler zusammen mit Filtern verwendet, was einen erheblichen Aufwand an technischen Einrichtungen und Abstimmarbeit erfordert.

Der Erfindung liegt die Aufgabe zugrunde, diesen Aufwand merklich zu vermindern und damit auch Kosten einzusparen.

Die Aufgabe wird durch die Merkmale der Ansprüche gelöst.

Das erfindungsgemässe System besitzt den Vorteil, dass der Empfänger einfacher auszuführen ist und dass für die Auskopplung und einen in jedem Fall notwendigen Signalübertrager gebräuchliche preiswerte Einzelteile benützt werden können, welche eine Doppelfunktion ohne zusätzliche teure und viel Platz einnehmende passive Filterbestandteile ermöglichen. Gewisse Einzelteile können zudem für andere Zwecke benützt werden, so dass sich auch auf diesem Wege Einsparungen an technischen Einrichtungen ergeben. Es ist schliesslich vorzüglich für das erwähnte breitbandige System zur Signalübertragung gemäss CH-PS Nr. 604409 geeignet.

Die Erfindung wird anhand einer Zeichnung näher erläutert.

Die Figuren der Zeichnung zeigen:

Fig. 1 einen Verteilungstransformator mit Ankopplungen;

Fig. 2 eine Einrichtung zur Auskopplung aus mehreren Netzphasen eines Mittelspannungsnetzes;

Fig. 3 ein Ersatzschaltbild;

Fig. 4 ein vereinfachtes Ersatzschaltbild, und

Fig. 5 einen Verstärker in Summierschaltung.

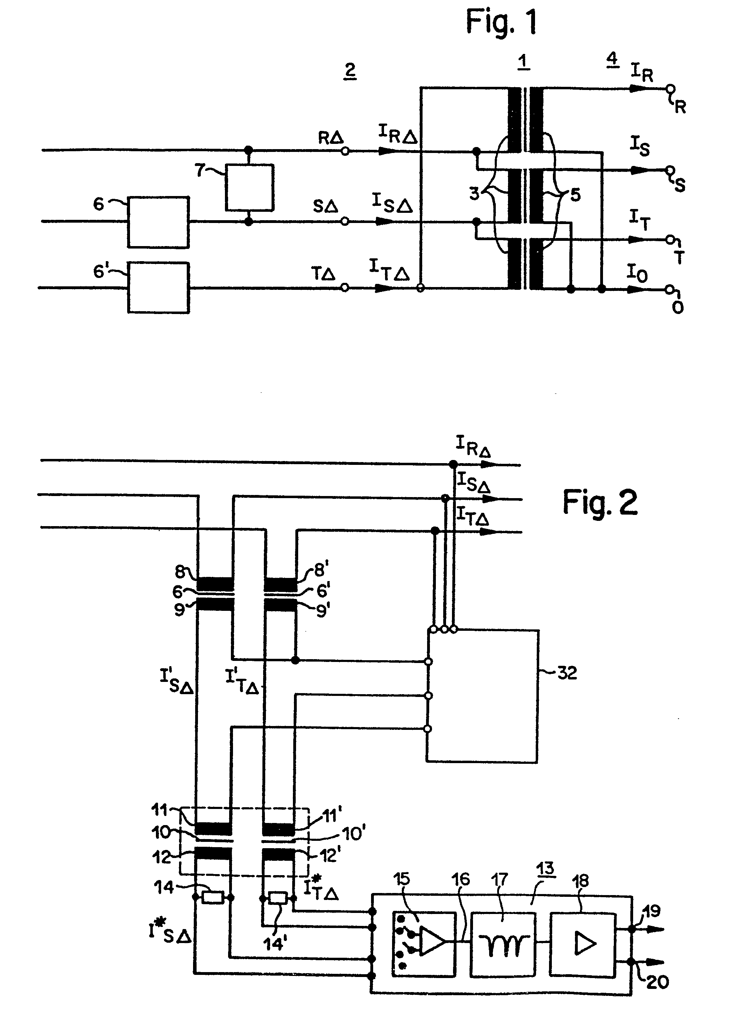

In der Fig. 1 ist eine Ausführungsform der Ankopplung an eine höhere Netzebene, z.B. an eine Mittelspannungsebene 2 dargestellt, welche über einen Transformator 1 mit einer Niederspannungsebene 4 verbunden ist. Selbstverständlich kann auch eine Ankopplung direkt an eine Niederspannungsebene 4 auf gleiche Art erfolgen.

Von der Niederspannungsebene 4 werden in diese Ebene überlagerte Tonfrequenzsignale mittels der Wicklungen 5 des Transformators 1 auf die Wicklungen 3 in der höheren Mittelspannungsebene 2 übertragen. In einer oder mehreren Leitungen dieser Mittelspannungsebene 2 kann je ein Stromwandler 6 oder zwischen mehreren Leitungen in dieser Ebene ein oder mehrere Spannungswandler 7 zur Auskopplung der Signale vorhanden sein.

Zum Verständnis der Erfindung wird zuerst der Verteiltransformator 1 der Fig. 1 samt den zugehörigen Phasenströmen erklärt. Zur Erklärung des Prinzips wird von einer Vereinfachung, nämlich von einem idealen Transformator ausgegangen. Demgemäss gelten die Beziehungen der einzelnen Phasenströmen untereinander auch für die entgegen dem Energiefluss über das Netz übertragenen Signalströme, welche beispielsweise für zu übertragende Verbrauchszählerstände signifikant sind.

In den Energieversorgungsnetzen in Europa werden in der Mittelspannungsebene 2 Dreileiter und in der Niederspannungsebene 4 Vierleiter verwendet. Transformatoren 1 weisen daher auf der Mittelspannungsseite 2 im Dreieck geschaltete Wicklungen 3 und auf der Niederspannungsseite 4 im Stern geschaltete Wicklungen 5 auf. Auf der Niederspannungsseite 4 stehen die Netzströme der einzelnen Phasen R, S, T und des mit dem Sternmittelpunkt verbundenen Nulleiters 0 in folgender Beziehung:

$$I_R + I_S + I_T = I_0 \qquad (1)$$

wobei die Indizes die einzelnen Phasen oder den Nulleiter bezeichnen.

Die Ströme auf der Mittelspannungsseite 2 summieren sich zu Null:

$$I_{R\Delta} + I_{S\Delta} + I_{T\Delta} = 0 \qquad (2)$$

Sie stehen mit den Strömen auf der Niederspannungsseite 4 des Transformators 1 in folgenden Beziehungen:

$$I_{R\Delta} = (I_R - I_S)k \qquad (3)$$

$$I_{S\Delta} = (I_S - I_T)k \qquad (4)$$

$$I_{T\Delta} = (I_T - I_R)k \qquad (5)$$

k ist die Transformatorenkonstante.

Ein auf einer Phase des Niederspannungsnetzes 4 eingekoppeltes Tonfrequenzsignal mit einem Frequenzspektrum zwischen 1 und 25 kHz, insbesondere ein breitbandiges, erscheint nur auf kürzere Entfernung (einige Kilometer) vorwiegend auf einer Phase der Mittelspannungsebene 2. Bei grösseren Distanzen wird das Signal auf allen drei Phasen, jedoch in ungleicher Stärke verteilt. Aus den Gleichungen 3 bis 5 ist ersichtlich, dass dann jeder einzelne der Ströme $I_{R\Delta}$, $I_{S\Delta}$ und $I_{T\Delta}$ der Mittelspannungsebene 2 durch die Ströme von mindestens zwei Phasen der Niederspannungsebene 4 bestimmt ist.

Die Auskopplung der Tonfrequenzsignale kann somit bei kurzen Distanzen zwischen dem Sender in der Niederspannungsebene 4 und dem Empfänger in der Niederspannungsebene 4 oder in der Mittelspannungsebene 2 mittels eines einzigen Stromwandlers 6 in einer einzigen Phase der betreffenden Netzebene erfolgen. Dabei ist die wirksamste Phase für die Auskopplung auszusuchen. Bei längeren Distanzen sind vor allem in der Mittelspannungsebene 2 mehrere Stromwandler 6, 6' oder Spannungswandler 7 zwischen mehreren Phasen anzuwenden, worauf später näher eingegangen wird.

Die Einrichtung zur Auskopplung aus mehreren Netzphasen einer Mittelspannungsebene 2 nach der Fig. 2 besteht aus zwei Stromwandlern 6 und 6', durch deren Primärwicklungen 8 resp. 8' die Phasenströme $I_{S\Delta}$ resp. $I_{T\Delta}$ fliessen. Die Ströme $I'_{S\Delta}$, $I'_{T\Delta}$ in den Sekundärwicklungen 9, 9' fliessen durch Primärwicklungen 11, 11' je eines Signalübertragers 10, 10' und ein Energiemessgerät 32. Den Sekundärwicklungen 12, 12' des Signalübertragers 10, 10' sind Widerstände 14, 14' parallelgeschaltet, und sie sind mit einem Empfänger 13, bestehend aus einer Summierschaltung 15, einem Kammfilter 17, einer Schwellen- und Verstärkerschaltung 18 mit Ausgängen 19 und 20 verbunden.

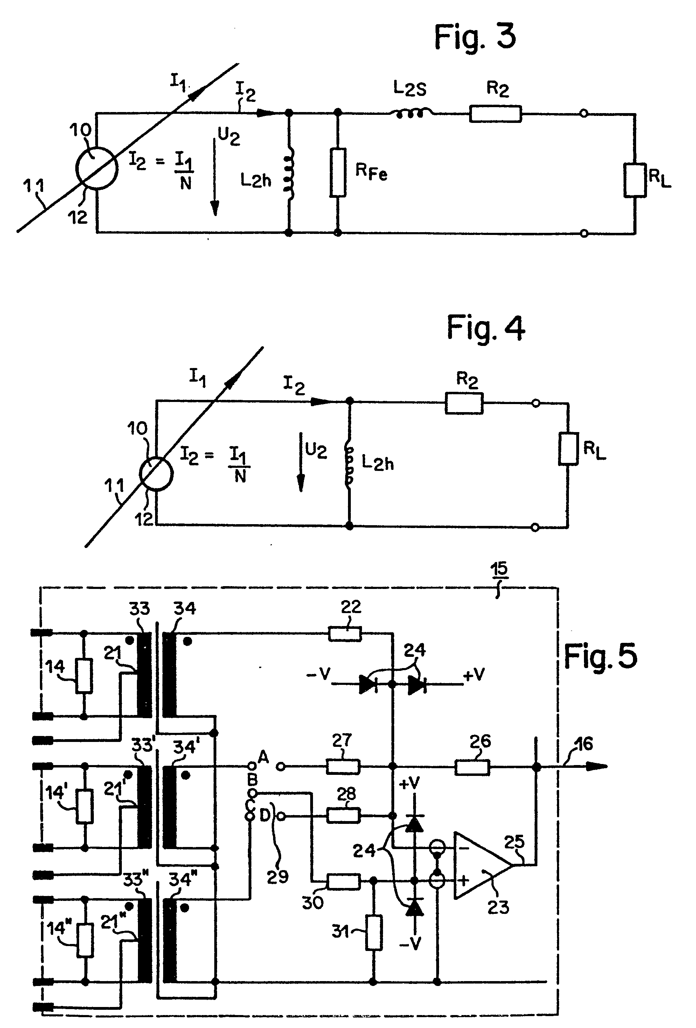

Vor der Erklärung der Wirkungsweise dieser Schaltung der Fig. 2 werden die Fig. 3 und 4 beschrieben.

In der Fig. 3 ist das vereinfachte Ersatzschaltbild eines einzelnen Signalübertragers 10 in einer Ausbildung als Stromwandler gezeichnet, der mit einem Stromwandler 6 der Fig. 2 in einer Phase der Mittelspannungsebene verbunden ist. Dabei ist die der jeweiligen einzelnen Phase R∆, S∆ oder T∆ zugeordnete Primärwicklung 11 des Signalübertragers 10 in Form eines einzigen Leiters dargestellt, durch welchen der Strom $I_1$ der betreffenden Phase fliesst. Aus diesem Strom $I_1$ resultiert der Strom $I_2$ in einer Sekundärwicklung 12 des Signalübertragers 10: $I_2 = \dfrac{I_1}{N}$, wobei N das Verhältnis der Windungszahlen der Primärwicklung 11 zur Sekundärwicklung 12 bedeutet. Der Strom $I_2$ fliesst durch die Sekundärwicklung 12 mit der Hauptinduktivität $L_{2h}$ und der Streuinduktivität $L_{2s}$, durch den ohmschen Widerstand $R_2$ der Sekundärwicklung 12 des Signalübertragers 10 und durch dessen Lastwiderstand $R_L$. Parallel zur Hauptinduktivität $L_{2h}$ ist der Eisenwiderstand $R_{Fe}$ des Signalübertragers 10 angeordnet.

Der Eisenwiderstand $R_{Fe}$ kann wegen der geringen Grösse der Verluste im Eisenkern des Signalübertragers 10 als hochohmig betrachtet und in der folgenden Erklärung vernachlässigt werden. Ebenfalls wird eine nur geringe Streuinduktivität $L_{2s}$ der Sekundärwicklung 9 des Stromwandlers 6 vorausgesetzt. Unter diesen Annahmen kann das Ersatzschaltbild gemäss Fig. 4 mit der Hauptinduktivität $L_{2h}$ und dem ohmschen Widerstand $R_2$ der Sekundärwicklung 12 des Signalübertragers 10 und dem Lastwiderstand $R_L$ samt den zugehörigen Grössen $I_1$, $I_2$ und der Spannung $U_2$ über dieser Sekundärwicklung 9 gelten.

Die Sekundärwicklung 12 des Signalübertragers 10 wird nun gemäss der Erfindung derart bemessen, dass die Hauptinduktivität $L_{2h}$ zusammen mit dem Widerstand $R_2$ der Sekundärwicklung 12 und dem Lastwiderstand $R_L$ ein Hochpassfilter mit der Grenzfrequenz der tiefsten, noch zu übertragenden Frequenz darstellt. Unter Grenzfrequenz $f_c$ ist dabei die Frequenz bei einem Abfall der Signalspannung $U_2$ von 3 dB definiert. Diese soll also bei einem bevorzugten Frequenzbereich von breitbandigen, zu übertragenden Signalen von 1 bis 25 kHz bei 1 kHz liegen. Für eine Signalübertragung von der Niederspannungsebene 4 der Fig. 2 zur Mittelspannungsebene 2 kann als unterste Grenzfrequenz $f_c$ ungefähr 5 kHz gewählt werden. Diese Grenzfrequenz $f_c$ berechnet sich nach folgender Gleichung:

$$f_c = \frac{1}{2\pi} \cdot \frac{R_2 + R_L}{L_{2h}} \qquad (6)$$

Nach dieser Gleichung 6 ist also anhand der gegebenen Grenzfrequenz $f_c$ der zu übertragenden Signale die Sekundärwicklung 12 des Signalübertragers 10 samt ihrem Lastwiderstand $R_L$ zu bemessen. Dem durch die als Auskopplungsglied und Filter wirkende Sekundärwicklung 12 des Signalübertragers 10 fliessenden Strom $I_2$ liegt folgende Gleichung 7 zugrunde:

$$I_2 = \frac{U_2}{j\omega L_{2h}} + \frac{U_2}{R_2 + R_L} \qquad (7)$$

Die anstehende Spannung $U_2$ ergibt sich daraus nach Gleichung 8:

$$U_2 = \frac{I_2}{\dfrac{1}{R_2 + R_L} + \dfrac{1}{j\omega L_{2h}}} \qquad (8)$$

Die Kopplung zwischen der als einziger Leiter dargestellten Primärwicklung 11 und der Sekundärwicklung 12 des Signalübertragers 10 ist im Fall seiner Ausführung als Stromwandler in der Regel genügend lose, so dass eine gute Filterwirkung mit einem angestrebten Spannungsabfall von beispielsweise 40 dB für die Netzfrequenz 50 Hz gegenüber dem Nutzsignal gewährleistet ist. Gewünschtenfalls kann der Eisenkern des Stromwandlers einen kleinen Spalt mit entsprechender, bei der Bemessung nach Gleichung 6 immer noch zu vernachlässigender Streuinduktivität $L_{2s}$ nach Fig. 3 aufweisen. Dies gewährt bei genügender Kopplung bei der Signalfrequenz eine gewisse Einstellmöglichkeit für die Grenzfrequenz $f_c$.

Bei grösseren Distanzen können insbesondere in der Mittelspannungsebene 2 mehrere Stromwandler 6, 6' in verschiedenen Phasen R$\Delta$, S$\Delta$ und T$\Delta$ oder in verschiedenen Abzweigungsleitungen angeordnet sein. Diese Art der Auskopplung wird bei der Fig. 2 benutzt. Bei einer solchen Auskopplung werden die Ströme $I^*_{S\Delta}$, $I^*_{T\Delta}$ der Sekundärwicklungen 12, 12' der einzelnen Signalübertrager 10, 10' summiert oder in besonderen Fällen subtrahiert.

In ähnlicher Weise können auch ein oder mehrere Spannungswandler 7 an zwei oder mehr Phasen in einer oder mehreren Abgangsleitungen der Mittelspannungsebene 2 oder der Niederspannungsebene 4 gekoppelt sein. Bei einem einzigen Spannungswandler 7 kann ebenfalls das vereinfachte Ersatzschaltbild gemäss Fig. 4 zur Bemessung der Auskopplung und der Hochpassfilterwirkung herangezogen werden. Die von Natur aus sehr enge Kopplung zwischen Primär- und Sekundärwicklung bei Spannungswandlern muss allerdings in diesem Fall durch einen Luftspaltkern herabgesetzt werden. Die dadurch bedingte Streuinduktivität $L_{2s}$ ist in diesem Fall bei der Bemessung zu berücksichtigen. Bei mehreren Spannungswandlern 7 kann ebenfalls eine weiter unten beschriebene Summierschaltung angewendet werden.

Die Einrichtung nach der Fig. 2 ist zur Auskopplung von in einer Niederspannungsebene heteropolar aufgeprägten, vorzugsweise breitbandigen Tonfrequenzsignalen mit einem Frequenzspektrum zwischen 1 und 25 kHz aus einer mittels Verteiltransformatoren 1 mit der Niederspannungsebene 4 der Fig. 1 verbundenen Mittelspannungsebene 2 bestimmt. Die in den Phasenleitungen mit den Strömen $I_{S\Delta}$ und $I_{T\Delta}$ eingeschlauften Stromwandler 6 und 6' bestehen vorzugsweise aus einer den betreffenden Leiter umfassenden Stromzange oder einem speziell dafür ausgelegten Stromwandler mit Primärwicklungen 8 und 8' und Sekundärwicklungen 9 und 9', durch welche der Strom der einen Phase, beispielsweise der Strom $I'_{S\Delta}$ der Phase S, und der Strom der zweiten Phase, beispielsweise der Strom $I'_{T\Delta}$ der Phase T in der gleichen Richtung fliessen. Den Sekundärwicklungen 12, 12' des Signalübertragers 10 werden die beiden Ströme $I^*_{S\Delta}$, $I^*_{T\Delta}$ entnommen, welche den Strömen $I_{S\Delta}$ und $I_{T\Delta}$ der Phasen S$\Delta$ und T$\Delta$ proportional sind.

Jede der Sekundärwicklungen 12 und 12' des entsprechenden Signalübertragers 10, 10' wird erfindungsgemäss so bemessen, dass jeweils die Hauptinduktivität $L_{2h}$ mit ihrem ohmschen Widerstand $R_2$ der Sekundärwicklungen 12 und 12' und den verteilten Lastwiderständen $R_L$ in der Summierschaltung 15 im Empfänger 13 einen Hochpass mit der gewünschten Grenzfrequenz $f_c$ bilden.

Die Ströme $I^*_{S\Delta}$, $I^*_{T\Delta}$ werden der Empfängerschaltung 13 zugeführt. Von den Strömen $I^*_{S\Delta}$, $I^*_{T\Delta}$ wird durch je einen Widerstand 14 und 14' eine Spannung abgeleitet. Diese Spannungen werden in einer Summierschaltung 15, die in Fig. 5 näher beschrieben wird, summiert. Der Ausgang 16 dieser Summierschaltung 15 liefert eine Spannung, aus deren Frequenzgemisch in bekannter Weise mittels des Kammfilters 17 die stark abgeschwächte Netzfrequenz und deren höhere Harmonische ausgesiebt und das Restsignal durch eine Schwellen- und Verstärkerschaltung 18 an die Ausgänge 19 und 20 geleitet werden, von denen eine nicht gezeichnete Auswerteschaltung angesteuert wird. Dieses Kammfilter 17 kann aus wenigen Gliedern bestehen und somit vereinfacht oder ggf. gänzlich weggelassen werden.

Selbstverständlich können auch die Ströme aus einer oder zwei anderen Phasen der Niederspannungs- oder der Mittelspannungsebene, z.B. von R$\Delta$ und S$\Delta$ oder R$\Delta$ und T$\Delta$ oder von drei Phasen der Mittelspannungsebene 2, in gleicher Weise erfasst und ausgekoppelt werden.

Besonders vorteilhaft ist dabei, dass die für ein in der Mittelspannungsebene angeordnetes Energiemessgerät 32 benötigten Stromwandler 6 oder nicht gezeichnete Spannungswandler gleichzeitig für die Auskopplung der von der Niederspannungsebene 4 her entgegen der Energieflussrichtung verlaufenden Tonfrequenzsignale benützt werden können. Doch kann die Auskopplung natürlich auch ohne ein solches Energiemessgerät 32 an einem anderen Ort in der Niederspannungsebene 4 oder Mittelspannungsebene 2 der Fig. 1 erfolgen.

In der Fig. 5 ist die Summierschaltung 15 im Empfänger 13 detailliert angegeben. Sie ist für drei Phasen R$\Delta$, S$\Delta$ und T$\Delta$ der Mittelspannungsebene 2 vorgesehen. Selbstverständlich sind für deren Speisung ebenso viele Stromwandler 8, 8' der Fig. 2 und ein nicht gezeichneter 8'' sowie ein nicht gezeichneter dritter Wandler im Signalübertrager, der hier mit 10'' bezeichnet wird, vorzusehen. Die Summierschaltung 15 besitzt beispielsweise drei Trenntransformatoren, deren Primärwicklungen 33, 33' und 33'' mit je einem Mittelabgriff 21, 21' und 21'' versehen sind. Diese dienen der Symmetrierung, der Erdung und dem Berührungsschutz dieser und der nachfolgenden Schaltung und liefern zugleich ein Bezugspotential. Die mit der Primärwicklung 23 zusammenwirkende Sekundärwicklung 34 ist mittels eines Widerstandes 22 mit dem invertierenden (−) Eingang eines Operationsverstärkers 23 in Summierschaltung fest verbunden, dessen hochohmige (−) und (+) Eingänge mittels Dioden 24 gegen etwelche durch die Kapazität der verschiedenen Wandler übertragenen Spannungsspitzen geschützt sind. Zwischen dem invertierenden (−) Eingang und einem Ausgang 25 des Operationsverstärkers 23 ist ein weiterer Widerstand 26 angeordnet, der in bekannter Weise eine Gegenkopplung bewirkt. Dieser Ausgang 25 bildet zugleich den Ausgang 16 der Summierschaltung 15. Weitere Widerstände 27 und 28 sind einerseits mit dem invertierenden (−) Eingang des Operationsverstärkers 23 und andererseits mit Kontakten in einem Kontaktfeld 29 mit Schaltstrecken A, B, C, D zusammengeschaltet.

Der nichtinvertierende (+) Eingang des Operationsverstärkers ist einerseits über einen Widerstand 30 mit einem weiteren Kontakt im Kontaktfeld 29 und andererseits über einen Widerstand 31 mit Masse zusammengeschaltet.

Die Wirkungsweise des Signalübertragers 10 und sein Zusammenwirken mit der Summierschaltung 15 in der Empfängerschaltung 13 ist folgende:

Die in der Fig. 5 dargestellte Schaltung hat mehrere Funktionen. Es können nämlich mit der gleichen, je drei Primärwicklungen 33, 33' und 33" und Sekundärwicklungen 34, 34' und 34" aufweisenden Trenntransformatoren eine oder mehrere Phasenströme $I^*_{R\Delta}$, $I^*_{S\Delta}$ und/oder $I^*_{T\Delta}$ erfasst werden. Dabei bilden jeweils die Widerstände 14, 14', 14" und die Widerstände 22, 27, 28 und 30 und die Widerstände der Verbindungskabel zwischen den Stromwandlern 6, 6' und eines nicht gezeichneten 6" und den Signalübertragern 10, 10', und eines nicht dargestellten 10" (s. Fig. 2) und zwischen letzteren und den Primärwicklungen 33, 33' und 33" die Lastwiderstände $R_L$ des Auskopplungsfilters, die zusammen mit den anderen Komponenten deren Grenzfrequenz bestimmen.

Wenn nur eine einzige Phase eines Stromwandlers 6 oder ein einziger Spannungswandler 7 vorhanden ist, wirkt der Operationsverstärker 23 als einfacher Verstärker für die Tonfrequenzsignale. Dazu wird die Primärwicklung 33 des Trenntransformators mit dem Signal beaufschlagt, wobei am Ausgang 25 des Operationsverstärkers 23 und am Ausgang 16 der Summierschaltung 15 das verstärkte Signal erscheint, das gemäss Fig. 2 durch das Kammfilter 17 und den weiteren Verstärker 18 weiterverarbeitet wird und an einem der Ausgänge 19 oder 20 für die Auswertung abgenommen werden kann. Für diesen einfachen Fall hat also die Summierschaltung 15 nur eine Verstärkerwirkung.

Noch vorteilhafter wirkt die Summierschaltung 15, wenn zwei oder mehrere Phasenströme aus einer Mittelspannungsebene 2 oder solche aus einer Niederspannungsebene 4 mittels mehrerer Stromwandler 6 oder Spannungswandler 7 der Fig. 1 erfasst werden. Dann werden mehrere der Primärwicklungen 33, 33' und 33" mit den Spannungen über den erwähnten Widerständen 14, 14' und 14" gespeist. Die Sekundärwicklung 34 ist dabei immer über den Widerstand 22 mit dem invertierenden (−) Eingang des Operationsverstärkers 23 verbunden. Wenn zwei Stromwandler 6 oder 6' oder ein in Fig. 2 nicht gezeichneter weiterer Stromwandler 6" verwendet werden, sind die Schaltstrecken A oder D im Kontakfeld 29 kurzgeschlossen, so dass die Spannung der Sekundärwicklung 34 mit denjenigen der Sekundärwicklungen 34' oder 34" summiert wird. Bei Verwendung von drei Stromwandlern 6, 6' und einem in Fig. 2 nicht gezeichneten 6" werden die Schaltstrecken A und C kurzgeschlossen, so dass die Spannungen der Sekundärwicklungen 34 und 34' summiert und die Spannung der Sekundärwicklung 34" subtrahiert wird.

Schliesslich können im Kontaktfeld 29 bei besonderen Netzverhältnissen auch bei den Spannungen der Sekundärwicklungen 34 und 34' oder 34" durch Schluss der Schaltstrecken B oder C Subtraktionen der Signalspannungen im Falle der Verwendung von nur zwei Wandlern 6, 6' oder 6, 6" vorgenommen werden.

Die Verbindung zwischen den Wandlern 6, 7 und dem Signalübertrager 10 oder zwischen diesem und der Empfängerschaltung 13 oder zwischen der Summierschaltung 15 und den anderen Schaltungsteilen der Empfängerschaltung 13, falls diese örtlich getrennt sind, kann zum Schutz gegen nutzsignalfremde Einstreuungen mittels abgeschirmter Kabel erfolgen. Im letzteren Fall kann auch die Speisung mit Gleichspannung über dieses Kabel vorgenommen werden.

Die Erfindung ermöglicht es somit, durch die Ausbildung der Stromwandler 6 oder der Spannungswandler 7 zusammen mit wenigen passiven Schaltteilen zugleich ein Auskopplungsfilter zu bilden, wobei vorzugsweise die für die Speisung von Energiemessgeräten 32 in der der Zentralstelle der betreffenden Ebene bereits vorhandenen Strom- oder Spannungswandler mitverwendet werden können. Auf diese Weise ergeben sich bedeutende Vereinfachungen bei der Auslegung und Montage. Durch die Gestaltung der Summierschaltung 15 kann in Verbindung mit dem Kontaktfeld 29 eine allen Bedürfnissen angepasste Signalbearbeitung vorgenommen werden.

## Patentansprüche

1. Empfänger für Tonfrequenzsignale, die über Leitungen eines Wechselstromverteilungsnetzes übertragen werden, wobei der Empfänger (13) mittels eines Signalübertragers (10) an den Sekundärkreis eines im Wechselstromverteilungsnetz vorhandenen Wandlers (6, 7) angeschlossen ist, dadurch gekennzeichnet, dass die Induktivität ($L_{2h}$) jeder Sekundärwicklung (12, 12') des betreffenden Signalübertragers (10, 10') zusammen mit deren ohmschem Widerstand ($R_2$) und deren Lastwiderstand ($R_L$) so bemessen ist, dass sie ein Hochpassfilter mit einer die tiefste Übertragungsfrequenz des auszukoppelnden Signals gerade noch umfassenden unteren Grenzfrequenz bildet.

2. Empfänger nach Anspruch 1, dadurch gekennzeichnet, dass der Wandler (6, 7) an mindestens eine Phase (R, S, T) der Niederspannungsebene (4) angeschlossen ist.

3. Empfänger nach Anspruch 1, dadurch gekennzeichnet, dass der Wandler (6, 7) an mindestens eine Phase (R∆, S∆, T∆) der Mittelspannungsebene (2) angeschlossen ist.

4. Empfänger nach Anspruch 1, dadurch gekennzeichnet, dass der Sekundärkreis (10) nach der Formel bemessen ist:

$$f_c = \frac{1}{2\,\pi} \cdot \frac{R_2 + R_L}{L_{2h}}$$

wobei $f_c$ die Grenzfrequenz, $R_2$ den ohmschen Widerstand der Sekundärwicklung (12, 12') des Signalübertragers (10), $L_{2h}$ dessen Induktivität und $R_L$ den Lastwiderstand bedeuten.

5. Empfänger nach Anspruch 4, dadurch gekennzeichnet, dass das Hochpassfilter für eine untere Grenzfrequenz von 1000 Hz bemessen ist.

6. Empfänger nach Anspruch 4, dadurch gekennzeichnet, dass das Hochpassfilter für eine untere Grenzfrequenz von 5000 Hz bemessen ist.

7. Empfänger nach Anspruch 1, dadurch gekennzeichnet, dass ein einziger Stromwandler (6) oder Spannungswandler (7) angeordnet ist.

8. Empfänger nach Anspruch 1, dadurch gekennzeichnet, dass in oder zwischen mehreren Phasenleitungen (R, S, T, RΔ, SΔ, TΔ) mehrere Stromwandler (6, 6') oder Spannungswandler (7) angeordnet sind.

9. Empfänger nach einem der Ansprüche 7 oder 8, dadurch gekennzeichnet, dass der angeschlossene Signalübertrager (10, 10') als Luftspaltwandler für eine abgeschwächte Kopplung ausgebildet ist.

10. Empfänger nach Anspruch 8, dadurch gekennzeichnet, dass die Wandler (6, 7) in mehreren Abzweigsleitungen angeordnet sind.

11. Empfänger nach Anspruch 1, dadurch gekennzeichnet, dass eine an den Signalübertrager angeschlossene Summierschaltung (15) im Empfänger wahlweise als einfacher Verstärker, Summierer oder Subtrahierer, zusammen mit gechlossenen Schaltstrecken (A, B, C, D) in einem Kontaktfeld (29), dient.

12. Empfänger nach Anspruch 1, dadurch gekennzeichnet, dass die Verbindung zwischen den einzelnen, örtlich getrennten Schaltungsteilen mittels abgeschirmter Kabel erfolgt.

13. Empfänger nach Anspruch 12, dadurch gekennzeichnet, dass im Fall der örtlichen Trennung der Summierschaltung (15) von den übrigen Schaltungsteilen der Empfängerschaltung (13) die Speisung mit Gleichspannung ebenfalls über das der Signalübertragung dienende Kabel erfolgt.

## Claims

1. A receiver for audio-frequency signals which are transmitted by way of lines of an alternating current distribution network, wherein the receiver (13) is connected by means of a signal transmitter (10) to the secondary circuit of a transformer (6, 7) in the alternating current distribution network, characterised in that the inductance ($L_{2h}$) of each secondary winding (12, 12') of the respective signal transmitter (10, 10') together with the ohmic resistance ($R_2$) and the load resistance ($R_L$) thereof is such that it forms a high-pass filter having a lower limit frequency which just still includes the lowest transmission frequency of the signal to be taken out.

2. A receiver according to Claim 1, characterised in that the transformer (6, 7) is connected to at least one phase (R, S, T) of the low-voltage plane (4).

3. A receiver according to Claim 1, characterised in that the transformer (6, 7) is connected to at least one phase (RΔ, SΔ, TΔ) of the medium-voltage plane (2).

4. A receiver according to Claim 1, characterised in that the secondary circuit (10) is rated in accordance with the following formula:

$$f_c = \frac{1}{2\,\pi} \cdot \frac{R_2 + R_L}{L_{2h}}$$

wherein $f_c$ denotes the limit frequency, $R_2$ denotes the ohmic resistance of the secondary winding (12, 12') of the signal transmitter (10), $L_{2h}$ denotes the inductance thereof and $R_L$ denotes the load resistance.

5. A receiver according to Claim 4, characterised in that the high-pass filter is rated for a lower limit frequency of 1,000 Hz.

6. A receiver according to Claim 4, characterised in that the high-pass filter is rated for a lower limit frequency of 5,000 Hz.

7. A receiver according to Claim 1, characterised in that there is a single current transformer (6) or voltage transformer (7).

8. A receiver according to Claim 1, characterised in that a plurality of current transformers (6, 6') or voltage transformers (7) are arranged in or between a plurality of phase lines (R, S, T, RΔ, SΔ, TΔ).

9. A receiver according to Claim 7 or 8, characterised in that the connected signal transmitter (10, 10') is formed as an air gap transformer for attenuated coupling.

10. A receiver according to Claim 8, characterised in that the transformers (6, 7) are disposed in a plurality of branch lines.

11. A receiver according to Claim 1, characterised in that a summing circuit (15) connected to the signal transmitter, in the receiver, serves selectively as a simple amplifier, summing means or subtracting means, together with closed switching paths (A, B, C, D) in a contact array (29).

12. A receiver according to Claim 1, characterised in that the connection between the individual locally separated circuit portions is made by means of screened cables.

13. A receiver according to Claim 12, characterised in that, where the summing circuit (15) is locally separated from the other circuit portions of the receiver circuit (13), the d.c. voltage feed is also effected by way of the cable that serves for signal transmission.

## Revendications

1. Récepteur pour signaux audiofréquences, qui sont transmis par l'intermédiaire de lignes d'un réseau de distribution de courant alternatif, le récepteur (13) étant relié au moyen d'un circuit de transfert du signal (10) au circuit secondaire d'un transformateur (6, 7) existant dans le réseau de distribution de courant alternatif, caractérisé en ce que l'inductance (L$_{2h}$) de chaque enroulement secondaire (12, 12') du circuit de transfert du signal considéré (10, 10'), en conjonction avec sa résistance ohmique (R$_2$) et sa résistance de charge (R$_L$), est dimensionnée de façon à former un filtre passe-haut de fréquence limite inférieure englobant exactement la fréquence de transmission la plus basse du signal à découpler.

2. Récepteur selon la revendication 1, caractérisé en ce que le transformateur (6, 7) est connecté à au moins une phase (R, S, T) du niveau (4) à basse tension.

3. Récepteur selon la revendication 1, caractérisé en ce que le transformateur (6, 7) est connecté au moins à une phase (RΔ, SΔ, TΔ) du niveau (2) à moyenne tension.

4. Récepteur selon la revendication 1, caractérisé en ce que le circuit secondaire (10) est dimensionné selon la formule:

$$f_c = \frac{1}{2\pi} \cdot \frac{R_2 + R_L}{L_{2h}}$$

où f$_c$ représente la fréquence limite, R$_2$ la résistance ohmique de l'enroulement secondaire (12, 12') du translateur de signal (10), L$_{2h}$ son inductance et R$_L$ la résistance de charge.

5. Récepteur selon la revendication 4, caractérisé en ce que le filtre passe-haut est dimensionné pour une fréquence limite inférieure de 1000 Hz.

6. Récepteur selon la revendication 4, caractérisé en ce que le filtre passe-haut est dimensionné pour une fréquence limite inférieure de 5000 Hz.

7. Récepteur selon la revendication 1, caractérisé en ce qu'est disposé un seul transformateur d'intensité (6) ou de tension (7).

8. Récepteur selon la revendication 1, caractérisé en ce que dans ou entre plusieurs lignes de phases (R, S, T, RΔ, SΔ, TΔ) sont disposés plusieurs transformateurs d'intensité (6, 6') ou de tension (7).

9. Récepteur selon l'une des revendications 7 ou 8, caractérisé en ce que le circuit de transfert de signal (10, 10') raccordé est conformé en transformateur à discontinuité magnétique pour un affaiblissement de couplage.

10. Récepteur selon la revendication 8, caractérisé en ce que les transformateurs (6, 7) sont disposés dans plusieurs lignes de dérivation.

11. Récepteur selon la revendication 1, caractérisé en ce qu'un montage additif (15) raccordé au circuit de transfert de signal sert, au choix, dans le récepteur comme simple amplificateur, additionneur ou soustracteur en conjonction avec des espaces de coupure fermés (A, B, C, D) dans un panneau des contacts (29).

12. Récepteur selon la revendication 1, caractérisé en ce que la liaison entre les parties individuelles de montage séparées localement se fait au moyen d'un câble blindé.

13. Récepteur selon la revendication 12, caractérisé en ce que, dans le cas d'une séparation locale du montage sommateur (15) des autres parties de circuit du montage récepteur (13), l'alimentation en tension continue est également effectuée par l'intermédiaire du câble servant au transfert du signal.

Fig. 1

Fig. 2

# Fig. 3

# Fig. 4

# Fig. 5